# EUROPEAN PATENT SPECIFICATION

(11) **EP 2 525 136 B1**
(45) Date of publication and mention of the grant of the patent: **23.08.2017**
(21) Application number: 10842880.6
(22) Date of filing: 19.09.2010
(51) Int. Cl.: F21Y 113/00, F21S 8/08, F21S 2/00, F21V 15/015, F21V 19/02, F21V 21/30, F21V 23/00, F21W 131/103, F21V 14/02, F21Y 115/10

(54) **LED STREET LAMP**
LED-STRASSENLAMPE
LAMPE DE RUE À DIODES ÉLECTROLUMINESCENTES

(30) Priority: 14.01.2010 CN 201010039754
(43) Date of publication of application: 21.11.2012
(73) Proprietor: SENGLED OPTOELECTRONICS CO., LTD, Wuzhen Town, Tongxiang City Zhejiang 314501 (CN)
(72) Inventor: Shen, Jinxiang, Tongxiang City, Zhejiang 314501 (CN)
(74) Representative: Chaillot, Geneviève
(86) International application number: PCT/CN2010/077102
(87) International publication number: WO 2011/085597

(56) References cited:
- WO-A1-98/33007
- CN-A- 101 482 241
- CN-A- 101 482 241
- CN-A- 101 520 145
- CN-A- 101 520 145
- CN-A- 101 586 758
- CN-A- 101 586 758
- CN-A- 101 608 744
- CN-A- 101 749 603
- CN-Y- 201 014 270
- CN-Y- 201 014 270
- CN-Y- 201 363 615
- CN-Y- 201 363 615
- DE-U1-202008 012 394
- DE-U1-202009 003 239
- US-A1- 2008 062 689

## Description

### FIELD OF THE INVENTION

The present invention generally relates to street lighting, especially a framework to fix LED lighting modules and a street lamp base of which the angle of LED lighting modules can be adjustable.

### BACKGROUND OF THE INVENTION

As the major application of semi-conductor lighting, LED street lamp features in long service life, strong mist penetration, and, more importantly, more energy saving than the traditional street lamp.

For the shortage of LED in optical performance, if you want to set a LED light source on a traditional lamp, it can only be done during the period of manufacture that is to carry out light distribution design according to the specific street lighting situation, namely to design lighting direction of each or each group of LED lamps, to light different street area and gain the overall lighting effect; the above mentioned street lamp can only be suitable for specific street lighting and each or each group of LED lights towards fixed directions, so the lighting angle cannot be adjusted to fit for other street lighting for certain limitations.

The Chinese patent CN201363615 discloses a LED street lamp base as defined in the preamble of claim 1.

### SUMMARY OF THE INVENTION

The invention provides a LED street lamp base that can adjust lighting angle according to street situation against the existing shortage.

Technical scheme of the invention is carried out as follows:
A LED street lamp base comprises a power source box at a front section, a lamp holder at a middle section and an end cap at an end section. The above mentioned lamp holder is composed of rotatable frame, a frame positioning unit connected with the frame to limit the frame rotation and several LED lighting modules installed side by side in the frame. A LED lighting module can be turned to connect with the frame on which a module positioning unit is set to limit the rotation of the LED lighting module.

As a preference, the described lamp holder mentioned above consists of two frames bilateral symmetrical along the central line of the lamp holder and a connecting piece used to connect the two frames; the front and back ends of the connecting piece are fixed and connected respectively with the power source box and the end cap, and; the inside of the frame can be turned to connect with the connecting piece while the outside of the frame is connected to the frame positioning unit.

As a preference, the above mentioned frame includes a left side plate, a right side plate, and a front side plate and a back side plate used to connect the left and right side plates. Both ends of each LED lighting module can be turned to connect with the above mentioned left and right sides plates. Several spindle holes are set on the same line to mount the LED lighting modules while several lead holes are set on the right side plate corresponding to the spindle holes on the left side plate for leads to go through. The right side plate is of arc shape, and the top and bottom ends of joint between the front side plate and the right side plate are set with grooves the same as that on the top and bottom ends of joint between the back side plate and the right side plate.

The mentioned connecting piece is a hollow profile including a sub-plate and two bilateral symmetrical support plates at both ends of the subplate that match with the right side plate of the frame and are used to support the right side plate and enable it to turn in the support plate; holes matching with lead holes on the right side plate of the frame are set on the support plate while the subplate and the two support plates form a cavity to hold a lead; both top and bottom ends of a support plate are open with positioning slots along their own length direction and a support rod goes through it with both ends respectively connected with the power source box and the end cap. The width and depth of the grooves on the front and back side plates determine the turning angle of the right side plate of the frame.

As a preference, the right end of each LED lighting module is set with a bulb from which a lead is drawn out, and; the left end of each LED lighting module is fixed with a circular ring of which the top and bottom ends on the outer circumference are respectively set with a elastic convex tooth to connect a module positioning unit. Bulb can turn freely to meet the demand of LED lighting module to turn in circumference direction and can be positioned when stopping turning with the help of the module positioning unit.

As a preference, the mentioned module positioning unit includes a clamp ring that is socketed out of the circular ring and there is a ledge in the middle part of the clamp ring while a spindle nose is set on the middle part of the ledge and inserted into a spindle hole of the left side plate; the up and down ends of the inner surface of the clamp ring are respectively set with a row of internal teeth; elastic convex teeth are geared with the mentioned internal teeth; the clamp ring is connected with the left side plate through a slide block and a sliding rail, and the periphery of the clamp ring is fixed on the left side plate; when a big stress is laid between elastic convex teeth and internal teeth, the elastic convex teeth can slide relative to internal teeth. Each LED lighting module is inserted in the circumferentially fixed clamp ring through a circular ring and the elastic convex teeth at outer circumference of the circular ring are geared with the internal teeth at the inner circumference of the clamp ring. To adjust the lighting angle of a single LED lighting module, the LED lighting module can be turned to make the elastic convex teeth slide in the internal teeth under stress from one tooth slot to another one; when the angle is adjusted well, stop turning and the elastic convex teeth will be locked in a tooth slot between the internal teeth and the LED lighting module will stop at the corresponding position. For another adjustment, the above mentioned operations can be repeated. At initial situation, the clamp ring shall be mounted one by one on the left side plate and slid to the corresponding position and then insert the circular ring on the LED lighting module into the internal circumference of the clamp ring to prevent the circular ring being inserted too deep resulting in a poor touch between the convex teeth and the internal teeth. The ledge is set in the middle part of the clamp ring to limit the position of the circular ring and it is set with the spindle nose that is inserted in the spindle nose on the left side plate in order to in favor of LED lighting module turning smoothly and to limit the clamp ring in the corresponding position so as to prevent it sliding on the left side plate.

As a preference, the up and down ends on the periphery of the clamp ring are set with sliding plates parallel to each other on which a raised slide block is set; the internal side of the left side plate is set with a cavity to hold the clamp ring while up and down ends of it are respectively set with 1 slide rail in which the slide block mentioned is set. Two parallel sliding plates are in touch with the up and down ends of the cavity to prevent the clamp ring from circumferential turning, and the slide block is set in the slide rail to prevent the clamp ring dropping from the cavity.

To better bear the bulb and to enable thet bulb to turn more freely, as a preference, the top and bottom edges of he right side plate are correspondingly opened with an arc groove to hold the bulb and enable the bulb to turn in it. The bulb of each LED lighting module is set in the arc groove mentioned above while the lead goes through the through-holes and holes above mentioned.

As a preference, the LED lighting module mentioned above consists of a radiator unit and a heat conduction subplate of which the top surface is to connect with the radiator unit and the bottom surface is set with a printed circuit and several LEDs. The circular ring and the bulb are respectively set on the left and right end faces of the radiator unit. The LED lighting module is an overall modeling including several LEDs forming a lighting tube that features in easy maintenance and replacement as well as good light concentration effect.

As a preference, the radiator unit mentioned above includes a baseplate of which the bottom face is connected with the top face of the heat conduction subplate and the top face is set with several fins side by side along the width direction of the baseplate and vertical to the baseplate.

As a preference, the fins are made from a single piece together with the baseplate that is convenient for radiation.

As a preference, the elastic convex tooth mentioned above is made of a single piece together with the circular ring, and both of them are made of rubber material. For rubber is soft, they can slide relative to an internal tooth under big stress.

As a preference, the frame positioning unit includes a frame positioning plate set on the outside of the frame and the top of the frame positioning plate is hinged with the power source box and the end cap; the end face on the frame positioning plate in touch with the frame is set with several parallel slots from up to down along horizontal direction, and; at least 1 strip matching with a slot is set on the end face of the frame in touch with the frame positioning plate to lock the strip into the slot. At initial situation, the left side plate is in touch with the frame positioning plate and the strip is locked in the slot. When adjusting the frame angle, turn over the frame positioning plate to break the strip away from the slot, and then turn the frame for certain angle, namely the right side plate turning certain angle in the support plate; when the angle is adjusted well, lay down the frame positioning plate to lock the strip into the corresponding slot so as to locate the frame.

As a preference, the frame mentioned above includes the left side plate, the right side plate, and the front and back side plates to connect the left and right side plates. The strip is set on the left side plate.

As a preference, the frame positioning plate is set with 4 parallel grooves from top to bottom and a strip is set on the top end of the left side plate.

For the LED street lamp base of the invention, the major design part contains two bilateral symmetrical frames each of which is set with several LED lighting modules side by side. Both angles of each frame and each LED lighting module are adjustable of strong practicality, and so we can adjust them at any time according to practical street situation in order to ensure ideal street lighting brightness and evenness.

### Drawings

Figure 1. Explosive view of the LED street lamp base of the invention;
Figure 2. Breakdown structure diagram of the frame and the connecting piece;
Figure 3. Breakdown structure diagram of the frame and the frame positioning plate;
Figure 4. Assembly structure diagram of the connecting piece, the frame and the frame positioning plate;
Figure 5. Assembly structure diagram of the connecting piece, the frame, the frame positioning plate and the end cap;

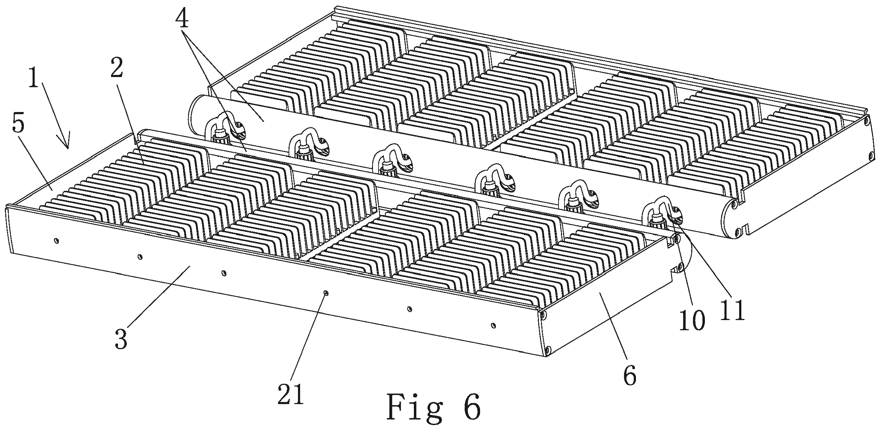

Figure 6. Assembly structure diagram of the frame and the LED lighting module;
Figure 7. Space structure diagram of the LED lighting module of the invention;
Figure 8. Plane structure diagram of the undersurface of the LED lighting module;
Figure 9. Connection structure diagram of the LED lighting module and the right side plate, the connecting piece and the clamp ring;
Figure 10. Enlarged view of Part A in Figure 9;
Figure 11. Connecting situation diagram of the frame positioning plate before adjusting the angle of the frame;
Figure 12. Situation diagram for the frame breaking away from the frame positioning plate after turning for certain angle when adjusting the frame angle;
Figure 13. Enlarged view of Part A in Figure 7;
Figure 14. Enlarged view of Part A in Figure 11 after turning for 90°clockwise.

### Detailed Description of the Preferred Embodiments

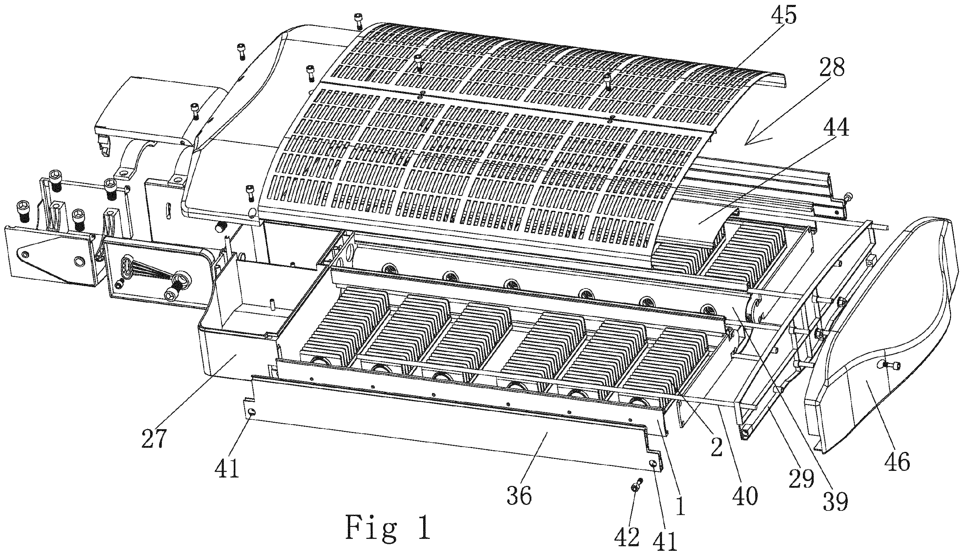

Specific implementation way of the invention is as follows:
Example of implementation: as shown in Figure 1∼∼6, the LED street lamp base includes a power source box 27 at a front section, a lamp holder 28 at a middle section and an end cap 29 at an end section. The lamp holder 28 includes two frames 1 bilateral symmetrical along the central line of the lamp holder 28 and a connecting piece 39 to connect the two frames; the front and back ends of the connecting piece 39 are respectively fixed and connected with the power source box 27 and the end cap 29 while the inside of the frame 1 can be turned to connect with the connecting piece 39; the outside of the frame 1 is connected with the frame positioning unit to limit the frame from turning while the inside of the frame is set with several LED lighting modules 2 side by side; a LED lighting module 2 can be turned to connect with the frame 1 on which a module positioning unit is set to limit the LED lighting module 2 from turning.

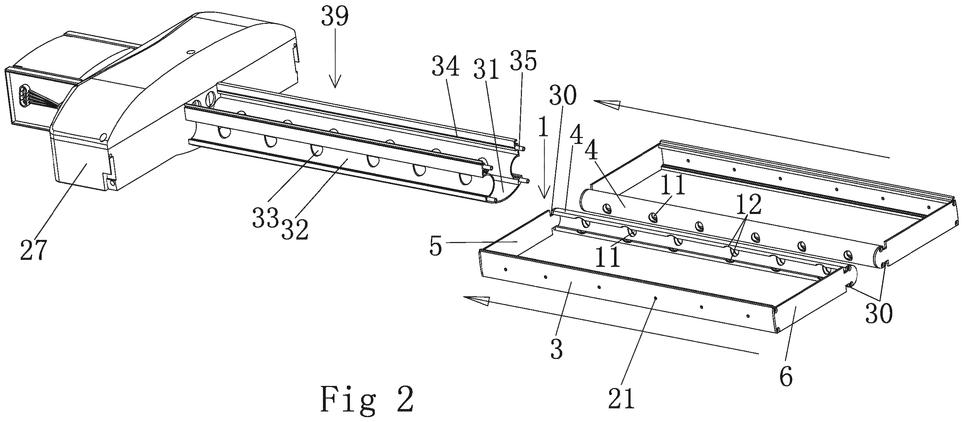

The descriptions on parts and unit structure are as follows:
As shown in Figure 2 ∼∼5, a frame 1 consists of a left side plate 3, a right side plate 4 and a front side plate 5 and a back side plate 6 to connect the left and right side plates through screw; both ends of each LED lighting module 2 can be turned to connect with the left side plate 3 and the right side plate 4; several spindle holes 21 are set along the same line on the left side plate to mount each LED lighting module 2 and several lead holes 11 are set on the right side plate 4 corresponding to the spindle holes 21 on the left side plate 3 for the leads of the LED lighting modules to go through; the right side plate 4 is in arc shape, exactly in circular arc shape. Grooves 30 are set on up and down ends at joint of the front side plate 5 and the right side plate 4 and on up and down ends at joint of the back side plate 6 and the right side plate 4.

The mentioned connecting piece 39 is a hollow profile including a subplate 31 and two bilateral symmetrical support plates 32 at both ends of the subplate 31 that match with the right side plate 4 and are used to support the right side plate 4 and enable it to turn in the support plate 32; holes 33 matching with the lead holes on the right side plate of the frame are set on a support plate 32 while the subplate 31 and the two support plates 32 form a cavity to hold a lead; both top and bottom ends of each support plate 32 are open with a positioning slot along their own length direction and a support rod 35 goes through it with both ends respectively connected with the power source box 27 and the end cap 29. The end cap 29 mentioned above is the profile formed by several steel pipes after connection and is set with several screw mounting holes and holes to connect the support rod.

The purpose to set the grooves 30 on the front side plate 5 and the back side plate 6 is as follows: when the right side plate 4 turns in the support plate 32, it will not be blocked by the top and bottom edges of the support plate 32, and the turning angle of the frame 1 can be adjusted by changing the width and depth of the grooves 30.

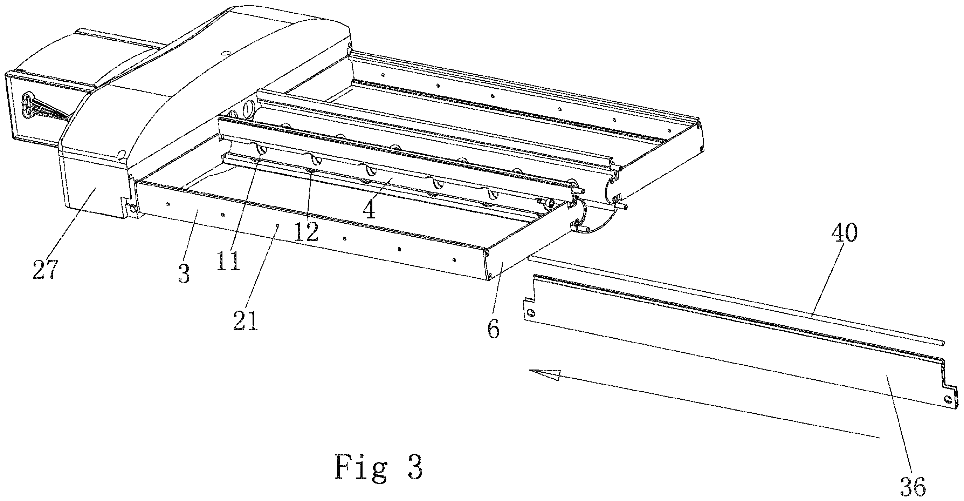

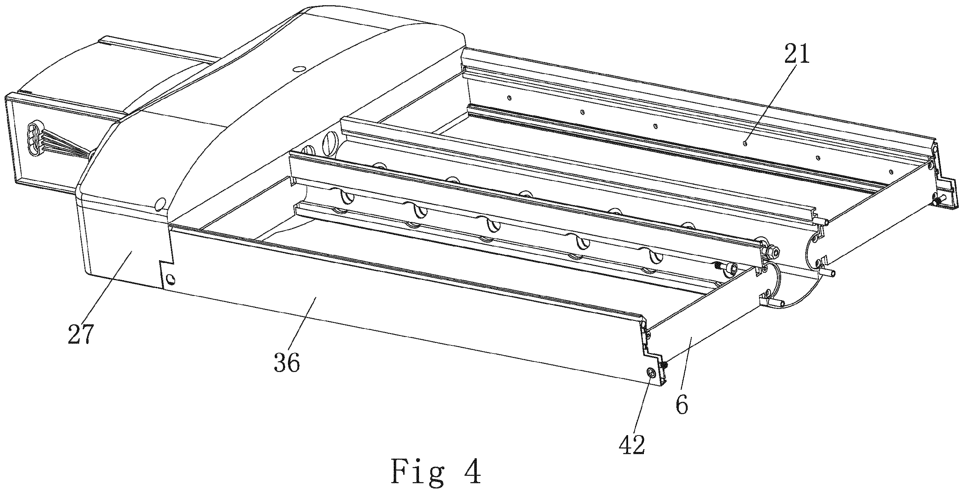

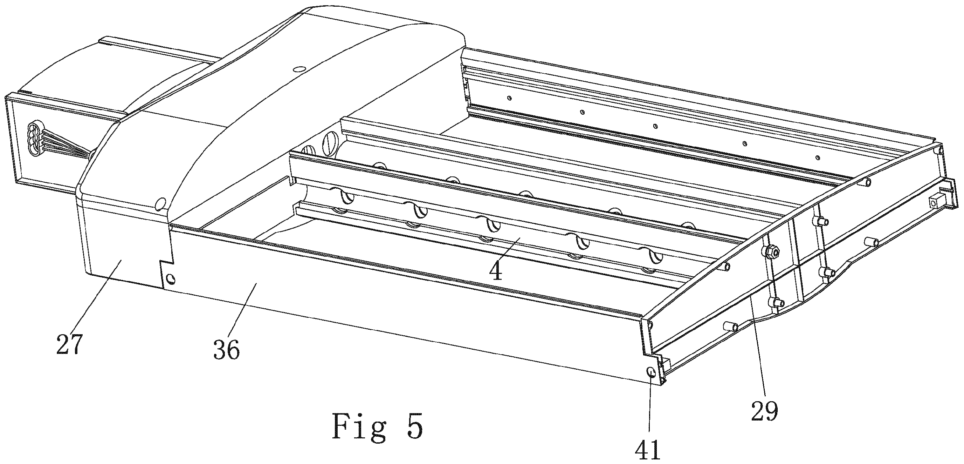

As shown in Figure 3, 4, 5, 11 and 12, the frame positioning unit includes a frame positioning plate 36 set on the outside of the frame 1 and the top of the frame positioning plate 36 is hinged with the power source box 27 and the end cap 29; in detail, the top end of the frame positioning plate 36 is set with a positioning spindle 40 and four parallel slots 37 are set from up to down on the contact face between the frame positioning plate 36 and the left side plate 3 of the frame, but the number of slots is not limited to four and you can set it according to practical situation; the bigger the number is, the finer the adjustment is. Slots 37 are set along horizontal direction, and; 1 strip 38 matching with a slot 37 is set on the left side plate 3 to lock strip 38 into the slot 37.

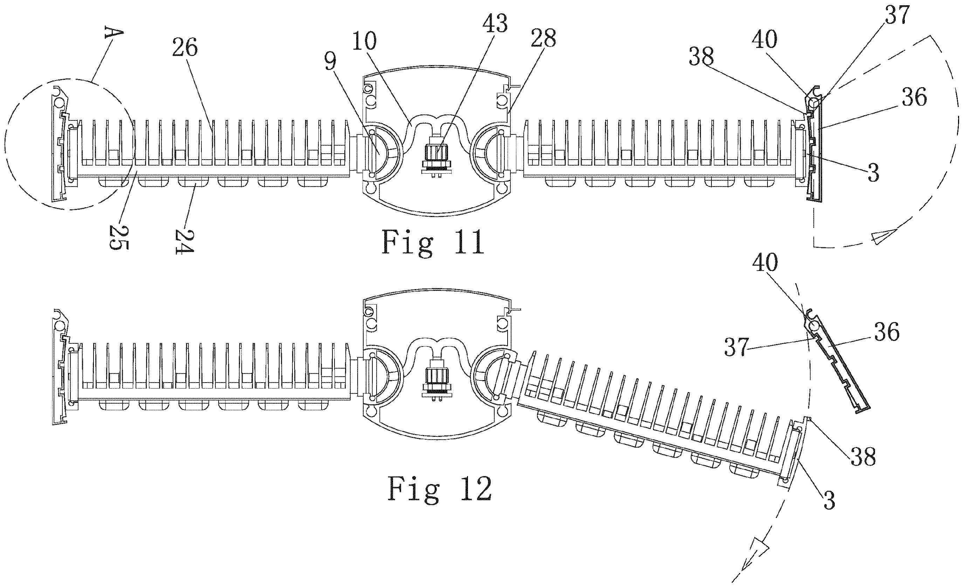

As shown in Figure 11 and 12, when a LED lighting module is mounted in a frame, to adjust the angle of the frame, we can turn over the frame positioning plate 36 along the direction f arrow in Figure 11 to break the strip 38 away from the slot 37, and turn the frame for certain angle along the direction of arrow in Figure 12; when the angle is adjusted well, turn the frame positioning plate 36 back to its initial position to lock the strip 9 in the corresponding slot 8 to locate the frame. The adjustment is easy to be done. When adjustment is finished, to further fix the frame positioning plate 36, both ends of the frame positioning plate 36 can be set with mounting holes 41 through which screws 42 go to fix the frame positioning plate 36 onto the end cap 39 and the power source box 27.

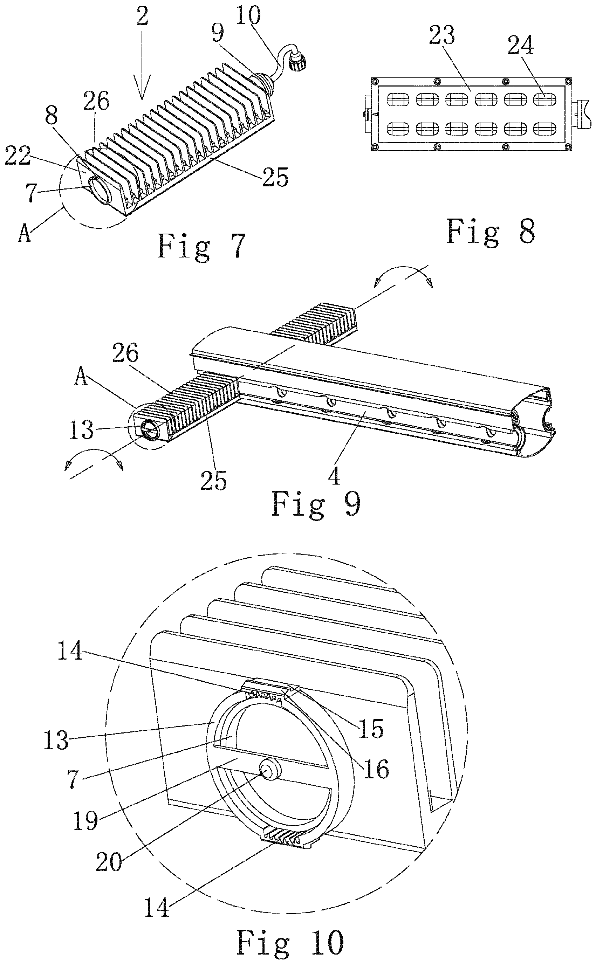

As shown in Figure 7 and 8, the LED lighting module 2 consists of a radiator unit 22 and a heat conduction subplate 23 the top of which is connected with the radiator unit 22 and the bottom of which is set with a printed circuit and several LED lamps 24; to improve the light concentration effect of LED lamp 24, it is optional to set lens on outer cover of LED lamp 24; the radiator unit 22 includes the baseplate 25 and the top face of the heat conduction subplate 23 is connected with the bottom face of the baseplate 25 the top of which is set with several fins 26 side by side; the fins 26 are set along the width direction of the baseplate 25 and all of them are vertical to the baseplate 25; the fins 26 and the baseplate 25 are made of aluminum; to further favor heat radiation, the fins 26 and the baseplate 25 are made from a single piece.

As shown in Figure 7, 9 and 13, the fins 26 on both left and right ends of the LED lighting module 2 are respectively set with a circular ring 7 and the bulb 9; the top and bottom ends on the outer circumference of the circular ring 7 are respectively set with an elastic convex tooth 8 which is made from a single piece together with the circular ring 7 and both of them are made of rubber material; the circular ring 7 is connected with the module positioning unit; a lead 10 is drawn out from the bulb 9 and connects with all power sources of LED lamp 24. As shown in Figure 11 and 12, in the left and right frames, the leads 10 of two relative LED lighting modules 2 extend into the cavity of the connecting piece 39 and are connected through a connector 43 which is connected with the power source box 27.

Arc slots 12 are set on both up and down edges of the right side plate 4 correspondingly in order to hold the bulb 9 and enable it to turn in the slot; the bulb 9 of the LED lighting module 2 is set in the arc slot 12 mentioned before and the lead 10 goes through the mentioned through-holes 11 and hole 33.

As shown in Figure 10, 11, 13 and 14, the module positioning unit mentioned above includes a circular clamp ring 13 with the same inner diameter as the outer diameter of the circular ring; there is a ledge 19 in the middle part of the clamp ring 13 and a spindle nose 20 is set on the middle part of the ledge 19 in spindle nose[D1] 20 on the left side plate 3; the up and down ends of the inner surface of the clamp ring 13 are respectively set with a row of internal teeth 14; elastic convex teeth 8 are geared with the mentioned internal teeth 14; the clamp ring 13 is connected with the left side plate 3 through a slide block and a sliding rail, and the periphery of the clamp ring 13 is fixed on the left side plate 3; when a big stress is laid between the elastic convex teeth 8 and the internal teeth 14, the elastic convex teeth 8 can slide relative to the internal teeth 14.

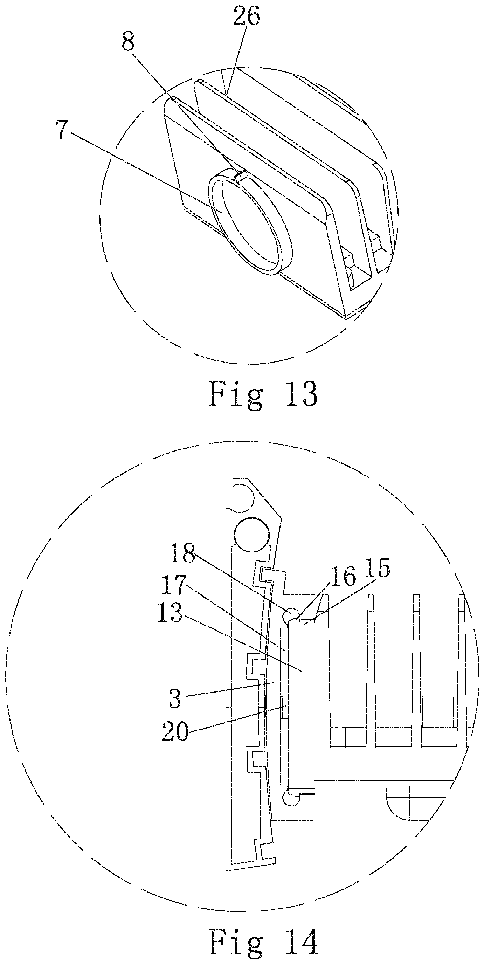

As shown in Figure 11 and 14, the detailed structures of the above mentioned slide block and sliding rail are as follows: the up and down ends on the periphery of the clamp ring 13 are set with sliding plates 15 parallel to each other on which a raised slide block 16 is set; the internal side of the left side plate 3 is set with a cavity to hold the clamp ring 13 and up and down ends of it are respectively set with 1 slide rail 18 in which the slide block 16 mentioned is set.

As shown in Figure 1, after the above mentioned structure is assembled, to make the overall structure more beautiful, we can set top caps 44 on the two support plates 32, shields 45 on the frame 1 and the connecting piece 39, and an end cap box 46 out of the end cap 29.

## Claims

1. A LED street lamp base, comprising a power source box (27) at a front section, a lamp holder (28) at a middle section and an end cap (29) at an end section, wherein the lamp holder (28) mentioned above includes a rotatable frame (1) which is connected with a frame positioning unit to limit the rotation of the frame and in which several LED lighting modules (2) are set side by side, **characterized by** the fact that the LED lighting modules mentioned above can be turned to connect with the frame (1) on which a module positioning unit is mounted to limit the rotation of a LED lighting module (2), and the right end of each LED lighting module (2) is set with a bulb (9) from which a lead (10) is drawn out; the left end of each LED lighting module (2) is fixed with a circular ring (7) of which the top and bottom ends on the outer circumference are respectively set with a elastic convex tooth (8) to connect a module positioning unit.

2. A LED street lamp base according to Claim 1, wherein: the lamp holder (28) mentioned above consists of two frames bilateral symmetrical along the central line of the lamp holder (28) and a connecting piece (39) used to connect the two frames (1); the front and back ends of the connecting piece (39) are fixed and connected respectively with the power source box (27) and the end cap (29), and; the inside of the frames (1) can be turned to connect with the connecting piece (39) while the outside of frames (1) is connected to the frame positioning unit.

3. A LED street lamp base according to Claim 2, wherein:
each frame (1) mentioned above consists of a left side plate (3), a right side plate (4) and a front side plate (5) and a back side plate (6) to connect the left and right side plates; both ends of the LED lighting modules (2) are connected with the mentioned left side plate (3) and right side plate (4) through rotation; several spindle holes (21) are set on the top edge of the left side plate (3) along the same line to mount the LED lighting modules while several holes are set on the right side plate (4) corresponding to the spindle holes on the left side plate (3) for the leads of the LED lighting modules to go through, and; the right side plate (4) is of arc shape and the top and bottom ends at joint of the front side plate (5) and the right side plate (4) is open with grooves (30), the same as that at joint between the back side plate (6) and the right side plate (4);
the connecting piece (3) is a hollow profile including a subplate (31) and two bilateral symmetrical support plates (32) at both ends of the subplate (31) that match with the right side plate (4) and are used to support the right side plate (4) and enable it to turn in the support plate (32); holes (33) matching with the lead holes on the right side plate of the frame are set on tge support plate (32) while the subplate (31) and two support plates (32) form a cavity to hold a lead; both top and bottom ends of the support plate (32) are open with a positioning slot along their own length direction and a support rod (35) goes through it with both ends respectively connected with the power source box (27) and the end cap (29).

4. A LED street lamp base according to Claim 1 or 2, wherein, the mentioned module positioning unit includes a clamp ring (13) that is socketed out of the circular ring (7) and there is a ledge (19) in the middle part of the clamp ring (13) and a spindle nose (20) is set on the middle part of the ledge (19); the up and down ends of the inner surface of the clamp ring (13) are respectively set with a row of internal teeth (14); elastic convex teeth (8) are geared with the mentioned internal teeth (14); the clamp ring (13) is connected with the left side plate (3) through a slide block and a sliding rail, and the periphery of the clamp ring (13) is fixed on the left side plate (3); when big stress is laid between the elastic convex teeth (8) and the internal teeth (14), the elastic convex teeth (8) can slide relative to the internal teeth (14).

5. A LED street lamp base according to Claim 4, wherein: the up and down ends on periphery of the clamp ring (13) are set with sliding plates (15) parallel to each other on which a raised slide block (16) is set; the internal side of the left side plate (3) is set with a cavity to hold the clamp ring (13) and up and down ends of it are respectively set with a slide rail (18) in which the slide block (16) mentioned is set.

6. A LED street lamp base according to Claim 1 or 2, wherein: arc slots (12) are set on both up and down edges of the right side plate (4) correspondingly in order to hold a bulb (9) and enable it to turn in the slot; the bulb (9) of each LED lighting module (2) is set in the arc slot (12) mentioned before and the lead (10) goes through the mentioned through-hole (11) and the hole (33).

7. A LED street lamp base according to Claim 1 or 2, wherein: each LED lighting module (2) consists of a radiator unit (22) and a heat conduction subplate (23) the top of which is connected with the radiator unit (22) and the bottom of which is set with a printed circuit and several LED lamps (24); the circular ring (7) and the bulb (9) are respectively set on the left and right end faces of the radiator unit (22).

8. A LED street lamp base according to Claim 7, wherein: the radiator unit (22) includes a baseplate (25) and the top face of the heat conduction subplate (23) is connected with the bottom face of the baseplate (25) the top of which is set with several fins (26) side by side; the fins (26) are set along the width direction of the baseplate (25) and all of them are vertical to the baseplate (25).

9. A LED street lamp base according to Claim 8, wherein the fins (26) and the baseplate (25) are made from a single piece.

10. A LED street lamp base according to Claim 8, wherein an elastic convex tooth (8) is made from a single piece together with the circular ring (7) and both of them are made of rubber material.

11. A LED street lamp base according to Claim 1, wherein: the frame positioning unit includes a frame positioning plate (36) set on the outside of the frame (1) and the top of the frame positioning plate (36) is hinged with the power source box (27) and the end cap (29); the end face on the frame positioning plate (36) in touch with the frame is set with several parallel slots (37) from up to down along horizontal direction, and; at least 1 strip (38) matching with a slot (37) is set on the end face of the frame (1) in touch with the frame positioning plate (36) to lock the strip (38) into the slot (37).

12. A LED street lamp base according to Claim 11, wherein: the frame (1) consists of the left side plate (3), the right side plate (4) and the front (5) and back (6) side plates to connect the left (3) and right (4) side plates; the strip is set on the left side plate (3).

13. A LED street lamp base according to Claim 12, wherein: 4 parallel slots (37) are set on the frame positioning plate (36) from up to down and 1 strip (38) is set on the top end of the left side plate (3).

## Patentansprüche

1. - Sockel für LED-Straßenlampe mit einem Stromquellenkasten (27) in einem Vorderabschnitt, einer Lampenfassung (28) in einem mittleren Abschnitt und einer Endkappe (29) an einem Endabschnitt, wobei die obengenannte Lampenfassung (28) einen drehbaren Rahmen (1) umfasst, der mit einer Rahmenpositioniereinheit verbunden ist, um die Rotation des Rahmens zu begrenzen, und in der mehreren LED-Beleuchtungsmodule (2) nebeneinander liegen, **dadurch gekennzeichnet, dass** die obengenannten LED-Beleuchtungsmodule gedreht werden können, um mit dem Rahmen (1) verbunden zu werden, auf den eine Modulpositioniereinheit montiert ist, um die Rotation eines LED-Beleuchtungsmoduls (2) zu begrenzen, und das rechte Ende jedes LED-Beleuchtungsmoduls (2) ist mit einer Glühbirne (9) besetzt, aus der eine Leitung (10) herausgezogen wird; das linke Ende jedes LED-Beleuchtungsmoduls (2) ist mit einem runden Ring (7) befestigt, dessen Ober- und Boden-Enden auf dem Außenumfang jeweils mit einem elastischen konvexen Zahn (8) besetzt sind, um eine Modulpositioniereinheit zu verbinden.

2. - Sockel für LED-Straßenlampe nach Anspruch 1, wobei: der obengenannte Lampenhalter (28) aus zwei bilateralen symmetrischen Rahmen entlang der zentralen Linie des Lampenhalters (28) besteht und einem Verbindungsstück (39), um die beiden Rahmen (1) zu verbinden; das vordere und hintere Ende des Verbindungsstück (39) sind mit dem Stromquellenkasten (27) bzw. der Endkappe (29) verbunden und daran befestigt; und das Innere der Rahmen (1) kann gedreht werden, um mit dem Verbindungsstück (39) verbunden zu werden, während die Außenseite der Rahmen (1) mit der Rahmenpositioniereinheit verbunden ist.

3. - Sockel für LED-Straßenlampe nach Anspruch 2, wobei:
jede obengenannte Rahmen (1) aus einer linken Seitenplatte (3), einer rechten Seitenplatte (4) besteht sowie einer vorderen Seitenplatte (5) und einer hinteren Seitenplatte (6), um die linke und rechte Seitenplatte zu verbinden; beide Enden der LED-Beleuchtungsmodule (2) sind mit der erwähnten linken Seitenplatte (3) und rechten Seitenplatte (4) durch Rotation verbunden; mehrere Spindellöcher (21) sitzen auf der Oberkante der linken Seitenplatte (3) entlang derselben Linie, um die LED-Beleuchtungsmodule zu montieren, während mehrere Löcher auf der rechten Seitenplatte (4) liegen, die den Spindellöchern auf der linken Seitenplatte (3) entsprechen, damit die Anschlussdrähte der LED-Beleuchtungsmodule hindurchgehen, und die rechte Seitenplatte (4) hat Bogenform und die Ober- und Boden-Enden an der Verbindung der vorderen Seitenplatte (5) und der rechte Seitenplatte (4) ist offen mit Rillen (30), wie das an der Verbindung zwischen der hinteren Seitenplatte (6) und der rechten Seitenplatte (4);
wobei das Verbindungsstück (3) ein Hohlprofil ist, mit einer Grundplatte (31) und zwei bilateralen symmetrischen Trägerplatten (32) an beiden Enden der Grundplatte (31), die mit der rechten Seitenplatte (4) übereinstimmen und benutzt werden, um die rechte Seitenplatte (4) zu stützen und sie zu befähigen, sich in der Trägerplatte (32) zu drehen; Löcher (33), die mit den Leitungslöchern auf der rechten Seitenplatte des Rahmens übereinstimmen, sitzen auf der Trägerplatte (32), während die Grundplatte (31) und zwei Trägerplatten (32) einen Hohlraum bilden, um eine Leitung zu halten; das obere und das untere Ende der Trägerplatte (32) sind offen, mit einer Platzierungsnut entlang ihrer Längsrichtung und eine Trägerstange (35) geht hindurch, deren beide Enden mit dem Stromquellenkasten (27) bzw. der Endkappe (29) verbunden sind.

4. - Sockel für LED-Straßenlampe nach Anspruch 1 oder 2, wobei die erwähnte Modulpositioniereinheit einen Klammerring (13) umfasst, der aus dem runden Ring (7) gesockelt ist, und es gibt eine Leiste (19) im Mittelteil des Klammerrings (13) und eine Spindelnase (20) auf dem Mittelteil der Leiste (19); das obere und das untere Ende der Innenfläche des Klammerrings (13) haben jeweils eine Innenverzahnungsreihe (14); elastische konvexe Zähne (8) sind mit der erwähnten Innenverzahnung (14) verzahnt; der Klammerring (13) ist mit der linken Seitenplatte (3) durch einen Kulissenstein und eine Gleitschiene verbunden, und der Umfang des Klammerrings (13) ist an der linken Seitenplatte befestigt (3); wenn große Beanspruchung zwischen den elastischen konvexen Zähnen (8) und der Innenverzahnung (14) besteht, können die elastischen konvexen Zähne (8) in Bezug auf die Innenverzahnung (14) gleiten.

5. - Sockel für LED-Straßenlampe nach Anspruch 4, wobei: das obere und das untere Ende auf dem Umfang des Klammerrings (13) zueinander parallele Gleitplatten (15) aufweisen, auf denen ein erhöhter Kulissenstein (16) gelegen ist; die innere Seite der linken Seitenplatte (3) hat einen Hohlraum, um den Klammerring (13) zu halten, und das obere und das untere Ende davon haben jeweils eine Gleitschiene (18), in der der erwähnte Kulissenstein (16) gelegen ist.

6. - Sockel für LED-Straßenlampe nach Anspruch 1 oder 2, wobei: Bogenschlitze (12) jeweils auf dem oberen und unteren Rand der rechten Seitenplatte (4) liegen, um eine Glühbirne (9) zu halten und sie zu befähigen, sich in der Nut zu drehen; die Glühbirne (9) jedes LED-Beleuchtungsmoduls (2) liegt in der genannten Bogennut (12) und die Leitung (10) geht durch die erwähnte Durchgangsbohrung (11) geht und das Loch (33).

7. - Sockel für LED-Straßenlampe nach Anspruch 1 oder 2, wobei jedes LED-Beleuchtungsmodul (2) aus einer Strahlereinheit (22) und einer Wärmeleitungsgrundplatte (23) besteht, deren Spitze mit der Strahlereinheit (22) verbunden ist und deren Boden eine gedruckten Schaltung und mehrere LED-Lampen (24) aufweist; der runde Ring (7) und die Glühbirne (9) liegen an der linken bzw. rechten Endseite der Strahlereinheit (22).

8. - Sockel für LED-Straßenlampe nach Anspruch 7, wobei die Strahlereinheit (22) eine Grundplatte (25) umfasst und die Oberseite der Wärmeleitungsgrundplatte (23) mit der Bodenseite der Grundplatte (25) verbunden ist, deren Oberseite mehrere Rippen (26) nebeneinander aufweist; die Rippen (26) liegen entlang der Breitenrichtung der Grundplatte (25) und sind alle senkrecht zur Grundplatte (25).

9. - Sockel für LED-Straßenlampe nach Anspruch 8, wobei die Rippen (26) und die Grundplatte (25) aus einem einzigen Stück gemacht sind.

10. - Sockel für LED-Straßenlampe nach Anspruch 8, wobei ein elastischer konvexer Zahn (8) aus einem einzigen Stück gemacht ist, zusammen mit dem runden Ring (7), und beide aus Gummimaterial sind.

11. - Sockel für LED-Straßenlampe nach Anspruch 1, wobei die Rahmenpositioniereinheit eine Rahmenplatzierungsplatte (36) an der Außenseite des Rahmens (1) umfasst und die Spitze der Rahmenplatzierungsplatte (36) mit dem Stromquellenkasten (27) und der Endkappe (29) gelenkig verbunden ist; die Endseite auf der Rahmenplatzierungsplatte (36), die in Kontakt mit dem Rahmen steht, hat mehrere parallele Schlitze (37) von oben nach unten in waagrechter Richtung, und mindestens 1 Streifen (38), der mit einer Nut (37) zusammenpasst, liegt an der Endseite des Rahmens (1) in Kontakt mit der Rahmenplatzierungsplatte (36), um den Streifen (38) in die Nut (37) festzupressen.

12. - Sockel für LED-Straßenlampe nach Anspruch 11, wobei der Rahmen (1) aus der linken Seitenplatte (3) besteht, der rechten Seitenplatte (4) und der Vorder- (5) und Rück-(6)-Seitenplatte, um die linke (3) und die rechte (4) Seitenplatte zu verbinden; der Streifen liegt auf der linken Seitenplatte (3).

13. - Sockel für LED-Straßenlampe nach Anspruch 12, wobei 4 parallele Schlitze (37) auf der Rahmenplatzierungsplatte (36) von oben nach unten liegen und 1 Streifen (38) auf dem oberen Ende der linken Seitenplatte (3) gelegen ist.

## Revendications

1. - Base de lampadaire à DEL, comprenant un boîtier de source d'alimentation (27) au niveau d'une section avant, un support de lampe (28) au niveau d'une section centrale, et un embout (29) au niveau d'une section d'extrémité, le support de lampe (28) mentionné ci-dessus comprend un cadre rotatif (1) qui est relié à une unité de positionnement de cadre pour limiter la rotation du cadre et dans lequel plusieurs modules d'éclairage à DEL (2) sont disposés côte à côté, **caractérisée par le fait que** les modules d'éclairage à DEL mentionnés ci-dessus peuvent être tournés pour se relier au cadre (1) sur lequel une unité de positionnement de module est montée pour limiter la rotation d'un module d'éclairage à DEL (2), et l'extrémité droite de chaque module d'éclairage à DEL (2) est munie d'une ampoule (9) à partir de laquelle un fil (10) est tiré ; l'extrémité gauche de chaque module d'éclairage à DEL (2) est fixée avec une bague circulaire (7) dont les extrémités supérieure et inférieure sur la circonférence externe sont munies respectivement d'une dent convexe élastique (8) pour relier une unité de positionnement de module.

2. - Base de lampadaire à DEL selon la revendication 1, dans laquelle : le support de lampe (28) mentionné ci-dessus consiste en deux cadres bilatéraux symétriques le long de l'axe central du support de lampe (28) et une partie de liaison (39) utilisée pour relier les deux cadres (1) ; les extrémités avant et arrière de la partie de liaison (39) sont fixées et reliées respectivement au boîtier de source d'alimentation (27) et à l'embout (29) ; et l'intérieur des cadres (1) peut être tourné pour se relier à la partie de liaison (39) tandis que l'extérieur des cadres (1) est relié à l'unité de positionnement de cadre.

3. - Base de lampadaire à DEL selon la revendication 2, dans laquelle :
chaque cadre (1) mentionné ci-dessus consiste en une plaque côté gauche (3), une plaque côté droit (4) et une plaque côté avant (5) et une plaque côté arrière (6) pour relier les plaques côtés gauche et droit ; les deux extrémités des modules d'éclairage à DEL (2) sont reliées à la plaque côté gauche (3) et à la plaque côté droit (4) mentionnées ci-dessus à rotation ; plusieurs trous de pivot (21) sont définis sur le bord supérieur de la plaque côté gauche (3) le long de la même ligne pour monter les modules d'éclairage à DEL tandis que plusieurs trous sont définis sur la plaque côté droit (4) en correspondance des trous de pivot sur la plaque côté gauche (3) pour y faire passer à travers les fils des modules d'éclairage à DEL ; et la plaque côté droit (4) est en forme d'arc et les extrémités supérieure et inférieure au niveau de la jonction de la plaque côté avant (5) et de la plaque côté droit (4) sont ouvertes avec des rainures (30), les mêmes que celles au niveau de la jonction entre la plaque côté arrière (6) et la plaque côté droit (4) ;
la partie de liaison (3) est un profilé creux comprenant une sous-plaque (31) et deux plaques de support symétriques bilatérales (32) au niveau des deux extrémités de la sous-plaque (31) qui correspondent à la plaque côté droit (4) et sont utilisées pour supporter la plaque côté droit (4) et lui permettre de tourner dans la plaque de support (32) ; des trous (33) correspondant aux trous de fil sur la plaque côté droit du cadre sont définis sur la plaque de support (32) tandis que la sous-plaque (31) et les deux plaques de support (32) forment une cavité pour contenir un fil ; les extrémités supérieure et inférieure de la plaque de support (32) sont ouvertes avec une fente de positionnement le long de leur propre direction longitudinale et une tige de support (35) passe à travers celle-ci avec les deux extrémités respectivement reliées au boîtier de source d'alimentation (27) et à l'embout (29).

4. - Base de lampadaire à DEL selon la revendication 1 ou 2, dans laquelle l'unité de positionnement de module mentionné comprend une bague de serrage (13) qui est emmanchée sur la bague circulaire (7), et il y a un rebord (19) dans la partie centrale de la bague de serrage (13) et un nez de pivot (20) est défini sur la partie centrale du rebord (19) ; les extrémités supérieure et inférieure de la surface interne de la bague de serrage (13) sont respectivement munies d'une rangée de dents internes (14) ; des dents convexes élastiques (8) sont engrenées avec les dents internes mentionnées (14) ; la bague de serrage (13) est reliée à la plaque côté gauche (3) par l'intermédiaire d'un bloc coulissant et d'un rail de coulissement, et la périphérie de la bague de serrage (13) est fixée sur la plaque côté gauche (3) ; lorsqu'une contrainte importante est appliquée entre les dents convexes élastiques (8) et les dents internes (14), les dents convexes élastiques (8) peuvent coulisser par rapport aux dents internes (14).

5. - Base de lampadaire à DEL selon la revendication 4, dans laquelle : les extrémités supérieure et inférieure sur la périphérie de la bague de serrage (13) sont munies de plaques coulissantes (15) parallèles l'une à l'autre, sur lesquelles un bloc coulissant surélevé (16) est prévu ; le côté interne de la plaque côté gauche (3) est munie d'une cavité pour contenir la bague de serrage (13) et les extrémités supérieure et inférieure de celle-ci sont munies respectivement d'un rail de coulissement (18) dans lequel le bloc coulissant mentionné (16) est disposé.

6. - Base de lampadaire à DEL selon la revendication 1 ou 2, dans laquelle : des fentes en arc (12) sont définies sur les bords supérieur et inférieur de la plaque côté droit (4) de manière correspondante afin de contenir une ampoule (9) et lui permettre de tourner dans la fente ; l'ampoule (9) de chaque module d'éclairage à DEL (2) est placée avant dans la fente en arc (12) mentionnée et le fil (10) passe à travers le trou traversant (11) mentionné et le trou (33).

7. - Base de lampadaire à DEL selon la revendication 1 ou 2, dans laquelle : chaque module d'éclairage à DEL (2) consiste en une unité de radiateur (22) et une sous-plaque de conduction thermique (23) dont la partie supérieure est reliée à l'unité de radiateur (22) et dont la partie inférieure est munie d'un circuit imprimé et de plusieurs lampes à DEL (24) ; la bague circulaire (7) et l'ampoule (9) sont respectivement placées sur les faces d'extrémité gauche et droite de l'unité de radiateur (22).

8. - Base de lampadaire à DEL selon la revendication 7, dans laquelle : l'unité de radiateur (22) comprend une plaque de base (25) et la face supérieure de la sous-plaque de conduction thermique (23) est reliée à la face inférieure de la plaque de base (25) dont la partie supérieure est munie de plusieurs ailettes (26) côte à côte ; les ailettes (26) sont placées selon la direction de largeur de la plaque de base (25) et toutes sont verticales par rapport à la plaque de base (25).

9. - Base de lampadaire à DEL selon la revendication 8, dans laquelle les ailettes (26) et la plaque de base (25) sont faites d'une seule pièce.

10. - Base de lampadaire à DEL selon la revendication 8, dans laquelle une dent convexe élastique (8) est faite d'une seule pièce conjointement avec la bague circulaire (7), et les deux sont faites de matériau en caoutchouc.

11. - Base de lampadaire à DEL selon la revendication 1, dans laquelle : l'unité de positionnement de cadre comprend une plaque de positionnement de cadre (36) placée sur l'extérieur du cadre (1) et la partie supérieure de la plaque de positionnement de cadre (36) est articulée avec le boîtier de source d'alimentation (27) et l'embout (29) ; la face d'extrémité sur la plaque de positionnement de cadre (36) en contact avec le cadre est munie de plusieurs fentes parallèles (37) allant de haut en bas selon la direction horizontale ; et au moins 1 bande (38) correspondant à une fente (37) est prévue sur la face d'extrémité du cadre (1) en contact avec la plaque de positionnement de cadre (36) pour verrouiller la bande (38) dans la fente (37).

12. - Base de lampadaire à DEL selon la revendication 11, dans laquelle : le cadre (1) consiste en la plaque côté gauche (3), la plaque côté droit (4) et les plaques côté avant (5) et arrière (6) pour relier les plaques côté gauche (3) et droit (4) ; la bande est prévue sur la plaque côté gauche (3).

13. - Base de lampadaire à DEL selon la revendication 12, dans laquelle : 4 fentes parallèles (37) sont prévues sur la plaque de positionnement de cadre (36) allant de haut en bas et 1 bande (38) est prévue sur l'extrémité supérieure de la plaque côté gauche (3).
